# EUROPÄISCHE PATENTSCHRIFT

(11) **EP 1 949 067 B1**
(45) Veröffentlichungstag und Bekanntmachung des Hinweises auf die Patenterteilung: **21.10.2015**
(21) Anmeldenummer: 06819553.6
(22) Anmeldetag: 16.11.2006
(51) Int. Cl.: G01N 1/14, G01N 1/18

(54) **PROBENNEHMER MIT EINER SEPARATEN TEMPERIEREINHEIT**
SAMPLER WITH A SEPARATE TEMPERATURE CONDITIONING UNIT
ECHANTILLONNEUR DOTE D'UNE UNITE SEPAREE DE CONTROLE DE TEMPERATURE

(30) Priorität: 17.11.2005 DE 102005055284
(43) Veröffentlichungstag der Anmeldung: 30.07.2008
(73) Patentinhaber: Endress+Hauser Conducta Gesellschaft für Mess- und Regeltechnik mbH+Co. KG, 70839 Gerlingen (DE)
(72) Erfinder: STEUERWALD, Ralf, 73642 Welzheim (DE); BARREIS, Karlheinz, 73547 Lorch (DE); WANDREI, Norbert, 70599 Stuttgart (DE)
(74) Vertreter: Andres, Angelika Maria
(86) Internationale Anmeldenummer: PCT/EP2006/068577
(87) Internationale Veröffentlichungsnummer: WO 2007/057432

(56) Entgegenhaltungen:
- EP-A- 1 059 519
- DE-A1- 3 012 294
- DE-A1- 10 227 032
- DE-A1-102004 015 083
- US-A- 2 348 806
- US-A- 3 897 687
- US-A- 5 587 926
- US-A1- 2005 016 299

## Beschreibung

Die Erfindung betrifft einen Probennehmer zur automatischen Entnahme von flüssigen Proben aus einer Probenentnahmestelle.

Aus der DE 102 27 032 A1 ist ein modular aufgebauter Online-Analysator bekannt geworden. Online-Analysatoren werden u. a. bei der Überwachung und Optimierung der Reinigungsleistung einer Kläranlage, bei der Überwachung von Belebungsbecken und des Kläranlagenauslaufs oder bei der Regelung der Füllmitteldosierung eingesetzt. Bevorzugt überwachen sie den Gehalt einer Messprobe an Ammonium, Phosphat oder Nitrat. Die Analyse einer Messprobe erfolgt hierbei unter Einsatz von bekannten Messmethoden. Entsprechende Mesageräte zur Analyse von Messproben werden von der Anmelderin angeboten und vertrieben.

Ein wesentlicher Vorteil von Online-Analysatoren ist darin zu sehen, dass sie über einen längeren Zeitraum in definierten Zeitabständen Messdaten hinsichtlich einer zu überwachenden Prozessgröße bereitstellen. Sie sind in der Lage, z. B. Tagesganglinien zu erstellen. Tagesganglinien liefern einerseits zuverlässig die gewünschte Information hinsichtlich des fortlaufenden Betriebs einer Anlage; andererseits wird Information hinsichtlich.eventuell erforderlicher Änderungen in der Verfahrenstechnik der Anlage bereitgestellt. Aufgrund der Analysedaten lassen sich mitunter beachtliche Einsparungen bei den Betriebsmitteln und den Betriebskosten verbuchen.

Der in der DE 102 27 032 A1 beschriebene Online-Analysator besteht mindestens aus den folgenden austauschbaren Modulen:
- einem Funktionsmodul, das derart ausgestaltet ist, dass es Messsignale bereitstellt, die zumindest eine physikalische oder chemische Prozessgröße repräsentieren - Bei dem Funktionsmodul handelt es sich beispielsweise um eine ionenselektive Messvorrichtung oder um eine colorimetrische Messeinrichtung. Als colorimetuische Messeinrichtung kommt entweder ein Photometer oder ein Spektrometer in Frage.
- einem Pumpenmodul, das derart ausgestaltet ist, dass es in vorgebbaren Zyklen in Abhängigkeit von dem jeweils eingesetzten Funktionsmodul eine vorgebbare Probenmenge und/oder eine vorgebbare Menge zumindest eines Reagenzmittels oder eine vorgebbare Menge eines Reinigungsmittels in das Funktionsmodul fördert;
- einem Elektronikmodul, das die Arbeitszyklen des jeweils eingesetzten Pumpenmoduls und/oder des jeweils eingesetzten Funktionsmoduls steuert, das die von dem Funktionsmodul gelieferten Messsignale auswertet und das die entsprechenden Analysedaten der Messprobe bereitstellt.

Die bekannte Lösung ermöglicht es, durch eine Veränderung und einen Austausch einzelner Module, die auf die einzelnen Messparameter und Messnethoden abgestimmt sind, die unterschiedlichsten Analysatortypen mit einer minimalen Anzahl von unterschiedlichen Modulen zu realisieren. Auch ist es aus dem zuvor genannten Stand der Technik bekannt geworden, ein Kühlmodul zur Kühlung des Reagenzmittels und/oder der Messprobe bei Bedarf in dem Gehäuse des Online-Analysators anzuordnen.

Darüber hinaus ist aus der US-PS 5,587,926 ein gekühlter Probennehmer bekannt geworden, bei dem der Kompressor der Kühleinheit im oberen Bereich des Gehäuses des Probennehmers angeordnet ist. Durch die Anordnung soll erreicht werden, dass der gekühlte Bereich des Gehäuses, in dem die Proben aufbewahrt werden, nicht durch die erhitzte Abluft des Kompressors beeinflusst wird. Durch die Integration der Kühleinheit in den Probennehmer ist dieser gut für Außenaufstellungen in unmittelbarer Nähe zur Probenentnahmestelle geeignet. Nachteilig bei der bekannten Lösung ist, dass der Betreiber bereits bei der Bestellung des Probennehmers die Entscheidung treffen muss, ob er eine Kühlung benötigt oder nicht; eine spätere Änderung oder Nachrüstung ist nicht mehr oder nur mit einem erheblichen technischen und finanziellen Aufwand möglich. Nachteilig ist auch, dass im Falle einer defekten Kühleinheit, das komplette Gehäuse ersetzt werden muss; zumindest aber müssen einzelne Komponenten der Kühleinheit ausgetauscht werden.

Weiterhin es bekannt geworden, Analysatoren zwecks Kühlung in Umschränken oder in Messhäusern, die klimatisiert sind, zu installieren. Es ist auch versucht worden, diese doch recht aufwendige Lösung dadurch zu umgehen, dass die Analysatoren als Tauch- oder Eintauchsonden ausgeführt werden. Tauch- oder Eintauchsonden haben aber den Nachteil, dass sie aufgrund von Verschmutzung durch das Medium und aufgrund des Handlings in unmittelbarer Umgebung des Mediums relativ schwierig zu warten sind.

Der Erfindung liegt die Aufgabe zugrunde, einen modular aufgebauten Probennehmer vorzuschlagen, der so ausgestaltet ist, dass er in unter beliebigen Bedingungen in unmittelbarer Nähe zum zu messenden oder zu überwachenden Medium positionierbar ist.

Die Aufgabe wird durch einen Probennehmer nach Patentanspruch 1 gelöst, der zumindest aus einem Gehäuse mit einer Tür besteht, und folgende Komponenten aufweist: eine Energievorsorgungseinheit, eine Regel-/Auswerteeinheit, eine Probenentnahmeeinheit, die in einem vorgebbaren Zeitabstand eine vorgegebene Probenmenge aus der Probenentnahmestelle entnimmt, eine im unteren Bereich des Gehäuses des Probennehmers angeordneten Probensammeleinheit, in der die entnommenen Proben gelagert sind, und eine Temperiereinheit, die zumindest den Bereich des Probennehmers, in dem die Probensammeleinheit angeordnet ist, auf eine vorgegebene Temperatur regelt, so dass der Probennehmer unter beliebigen thermischen Bedingungen an der Probenentnahmestelle einsetzbar ist. Der erfindungsgemäße Probennehmer ist somit für Außenaufstellung bestens geeignet und zeichnet sich darüber hinaus dadurch aus, dass er flexibel an beliebige Anforderungen angepasst werden kann. Darüber hinaus ist er sehr service-freundlich.

Gemäß der erfindungsgemäßen Vorrichtung ist vorgesehen, dass die Temperiereinheit in einem separaten Gehäusemodul angeordnet ist. Bevorzugt ist das Gehäusemodul thermisch isoliert. Insbesondere ist eine Adaptereinheit vorgesehen, mit der das separate Gehäusemodul mit Temperiereinheit an einer Außenfläche des Probennehmers adaptierbar ist. Als bevorzugte Varianten zur Anbringung des Gehäusemoduls an dem Gehäuse des Probennehmers sind zu nennen: Anbringung der Temperiereinheit an einer der Seitenwände des Gehäuses des Probennehmers, unter dem Probennehmer oder auf dem Probennehmer. Die Ausgestaltung der Temperiereinheit als separates Anschlussmodul hat den Vorteil, den Probennehmer an die am Ort der Probennahme herrschenden Verhältnisse optimal anzupassen. Ist genügend Platz in der Höhe vorhanden, so ist es sinnvoll, das Gehäusemodul und das Gehäuse des Probennehmers übereinander anzuordnen. Mangelt es an einem entsprechenden Platz in der Höhe, besteht die Möglichkeit das Temperiermodul seitlich an dem Gehäuse des Probennehmers anzubringen. Bevorzugt sind das Gehäuse des Probennehmers und das von dem Probennehmer abgesetzte Gehäusemodul, in dem die wesentlichen Komponenten der Temperiereinheit angeordnet sind, thermisch voneinander isoliert.

Optional besteht also die Möglichkeit, einen Probennehmer oder auch einen Online-Analysator mit einem separaten Kühl- bzw. Klima- bzw. Temperiermodul auszustatten, welches leicht an dem Gehäuse des Probennehmers oder des Online-Analysators installiert und deinstalliert werden kann. Das Temperiermodul ist hoch integriert und beinhaltet die komplette Funktionalität einer Temperiervorrichtung in einer kompakten Bauweise. Insbesondere ist es möglich, den Probennehmer oder den Online-Analysator nachträglich mit dem Temperiermodul aufzurüsten. Im Servicefalle kann das Modul sehr einfach ausgetauscht werden. Generell lässt sich sagen, dass der modular aufgebaute Probennehmer bzw. der gekühlte Online-Analysator sehr flexibel an spezielle Kundenwünsche anpassbar ist. Kundenspezifische Lösungen sind schnell, kostengünstig und einfach zu realisieren.

Eine vorteilhafte Ausgestaltung des erfindungsgemäßen Probennehmers sieht zumindest eine Befestigungsplatte vor, an der das Gehäuse des Probennehmers und/ oder das Gehäusemodul mit der Temperiereinheit befestigt sind/ist. Die Befestigungsplatte ist bzw. die Befestigungsplatten sind an der Rückseite und/oder an zumindest einer Seitenwand des Gehäuses des Probennehmers und/oder des Gehäusemoduls mit der Temperiereinheit angeordnet. Insbesondere ist das Gehäusemodul mit der Temperiereinheit oberhalb des Gehäuses des Probennehmers an der Befestigungsplatte bzw. an den Befestigungsplatten befestigt.

Gemäß einer vorteilhaften Ausgestaltung der erfindungsgemäßen Vorrichtung wird vorgeschlagen, dass eine Analysevorrichtung in dem Gehäuse platziert ist, die die entnommene Probe online analysiert. Somit ist eine Vorort-Analyse am Messort in direktem Zusammenhang mit der Probenförderung möglich. Aufgrund der kürzeren Wege stehen die Messergebnisse entsprechend schneller zur Verfügung; zudem sind die Eingriffszeiten in den Prozess kürzer. Auch lassen sich die hohen Investitionskosten für Messhäuser, Messcontainer und Ähnliches vermeiden.

Durch die Modularität der Komponenten kann die erfindungsgemäße Vorrichtung individuell an die kundenspezifischen Bedürfnisse angepasst werden. So kann es vorkommen, dass zum gegenwärtigen Zeitpunkt an einer definierten Messstelle lediglich eine Probennahme durchgeführt werden soll. Zu einem späteren Zeitpunkt besteht dann die Notwendigkeit, eine Prozessgröße der gezogenen Proben vor Ort zu analysieren. Diese unterschiedlichen Ausrichtungen sind infolge des modularen Aufbaus problemlos möglich: das Probennahmemodul kann entfernt und durch ein Pumpmodul und ein Analysemodule ersetzt oder ergänzt werden.

Um eine einfache Anpassung an die vom Kunden bzw. vom Anwender spezifizierten Anforderungen zu ermöglichen, ist weiterhin vorgesehen, die Energievorsorgungseinheit und/oder die Regel-/Auswerteeinheit als Elektronikmodul auszugestalten, welches alle vorgesehenen Funktionalitäten des modular aufgebauten Online-Analysators zur Verfügung stellt.

Darüber hinaus ist vorgesehen, dass die Probenentnahmeeinheit, welche zumindest aus einem Ansaugschlauch, einer Pumpe und einer Verteilerstation für die Proben besteht, als Modul ausgestaltet ist. Beispielsweise handelt es sich bei dem Pumpmodul um eine Vakuum-Pumpe oder um eine Peristaltikpumpe.

Gemäß einer vorteilhaften Ausgestaltung der erfindungsgemäßen Vorrichtung ist vorgesehen, dass das Kühl/Temperiermodul und die Probensammeleinheit eine Einheit bilden, die mechanisch und/oder elektrisch von den weiteren Teilen des Probennehmers bzw. Analysators abgetrennt ist.

Die Erfindung wird anhand der nachfolgenden Figuren näher erläutert. Es zeigt:
Fig. 1: eine schematische Darstellung einer ersten Ausführungsform des erfindungsgemäßen Probennehmers,
Fig. 2: eine schematische Darstellung einer zweiten Ausführungsform des erfindungsgemäßen Probennehmers,
Fig. 3: eine schematische Darstellung einer dritten Ausführungsform mit Befestigungsplatte im rückwärtigen Bereich des temperierten Probennehmers a) in Draufsicht
   b) in Seitenansicht
   und
Fig. 4: eine schematische Darstellung einer vierten Ausführungsform mit Befestigungsplatten im seitlichen Bereich des temperierten Probennehmers
   a) in Draufsicht
   b) in Seitenansicht.

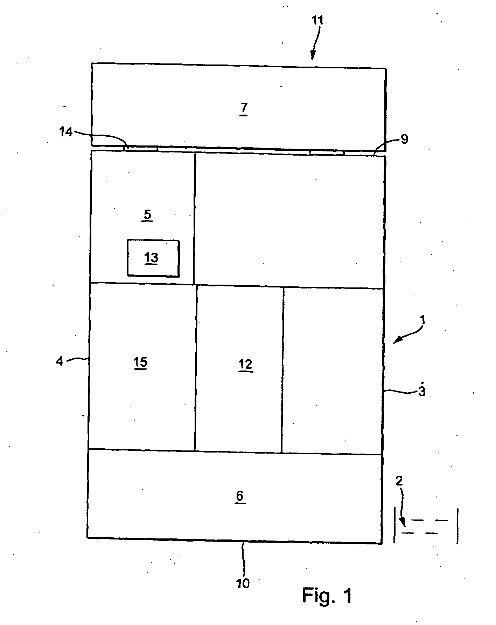

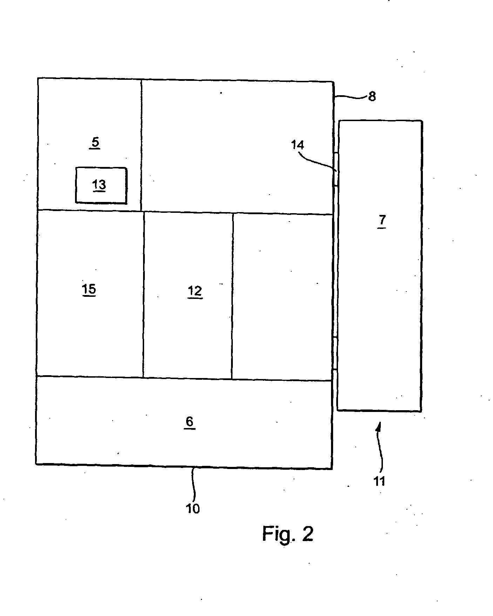

Fig. 1 zeigt eine schematische Darstellung einer ersten Ausführungsform des erfindungsgemäßen Probennehmers 1. Der Probennehmer 1 ist modular aufgebaut und besteht aus einem Gehäuse 3 mit einer bevorzugt im vorderen Bereich angeordneten Tür 4. In dem Gehäuse 3 sind das Elektronikmodul 5, bestehend aus Energieversorgungseinheit 13 und einer Regel-/Auswerteeinheit, von dem sog. Nassteil abgetrennt. Hierdurch sind die empfindlichen Elektronikkomponenten vor Kontakt mit der flüssigen Messprobe effektiv geschützt. Bevorzugt ist das Elektronikmodul 5 im oberen Bereich des Gehäuses 3 angeordnet, während der Nassraum sich im unteren Bereich des Gehäuses 3 befindet. In dem Nassraum sind die Probenentnahmeeinheit 12, die Probensammeleinheit 6 mit zumindest einem Sammelbehälter und das Analysemodul 15 positioniert. Das Analysemodul ist auf die jeweils zu überwachende Prozessgröße abgestimmt. Die Probenentnahmeeinheit setzt sich zusammen aus einem Ansaugschlauch, einer Pumpe, üblicherweise einer Peristaltikpumpe oder eine Vakuumpumpe, und einem Probenverteiler, über den die entnommenen Proben in den zumindest einen Sammelbehälter eingefüllt werden. Die einzelnen Komponenten sind in den Figuren Fig. 1 und Fig. 2 nicht gesondert dargestellt. Allerdings sind diese Komponenten beispielsweise von einem stationären Probennehmer mit, der von der Firma Endress+Hauser unter der Bezeichnung ASP-Station vertrieben wird, bestens bekannt.

Abgetrennt von dem Gehäuse 3 des Probennehmers 1, befindet sich das Gehäusemodul 11 mit der Temperiereinheit 7. Bei der in Fig. 1 dargestellten Ausführungsform des Probennehmers 1 ist das Gehäusemodul 11 an der Deckfläche 9 des Gehäuses 3 des Probennehmers 1 montiert. Bei der in Fig. 2 gezeigten Ausführungsform ist das Gehäusemodul 11 an der Seitenwand 8 des Gehäuses 3 festgemacht. Bevorzugt erfolgt die Befestigung des Gehäusemoduls 11 über eine lösbare Verbindung. Hierzu vorgesehen ist eine Adaptereinheit 14, die im einfachsten Fall aus ineinander greifenden Einschub-Schienen besteht.

Die elektrische Verbindung von dem abgesetzten Gehäusemodul 11 zu dem Gehäuse 3 des Probennehmers 1 erfolgt durch eine in den Figuren Fig. 1 und Fig.2 nicht gesondert dargestellte Öffnung hindurch. Bevorzugt ist die Öffnung so ausgestaltet, dass das Elektronikmodul 5 von dem Nassraum abgeschottet ist.

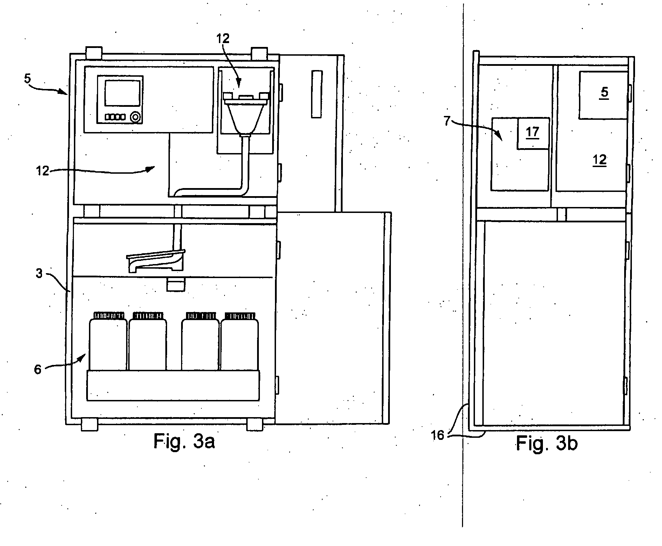

Fig. 3a zeigt eine schematische Darstellung einer dritten Ausführungsform mit einer Befestigungsplatte 16 im rückwärtigen und im unteren Bereich des temperierten Probennehmers 1 in Draufsicht - bei geöffneten Türen. Fig. 3b zeigt die Ausführungsform in Seitenansicht.

An der Befestigungsplatte 16 sind das Gehäuse 3 des Probennehmers 1 und darüber die als Modul ausgebildete Temperiereinheit 7 mit Kompressor 17, Verflüssiger und Verdampfer befestigt. An korrespondierenden Stellen in der Unterseite der Temperiereinheit 7 und der Oberseite des Gehäuses 3 des Probennehmers 1 ist jeweils eine Öffnung vorgesehen, über die eine bevorzugt isolierte Verbindung der mechanischen und/oder ggf. die elektrischen Verbindungsleitungen zwischen den beiden Gehäusen 3, 7 vorgesehen. Durch die Ausgestaltung der Temperiereinheit 7 als Modul, ist es möglich, einen Probennehmer auch nachträglich mit einer Temperiereinheit 7 auszustatten.

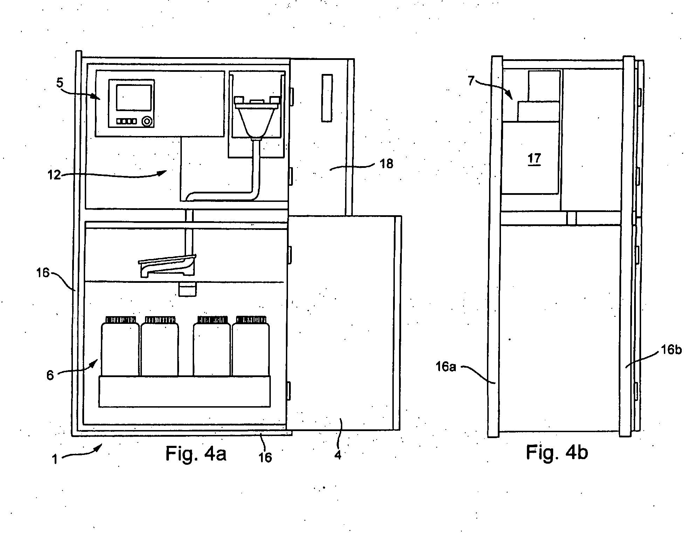

Bei der in Fig. 4a gezeigten Draufsicht auf eine vierte Ausführungsform sind zwei Befestigungsplatten 16a, 16b in den beiden seitlichen Bereichen des Gehäuses 3 des Probennehmers 1 und der Temperiereinheit 7 vorgesehen. Fig. 4b zeigt die Ausführungsform in Seitenansicht. Wiederum sind die beiden Gehäuseteile 3, 7 voneinander beabstandet, wobei die Temperiereinheit 7 oberhalb des Gehäuses 3 des Probennehmers befestigt ist. Die Befestigung der Gehäusemodule 3, 7 an den seitlich vorgesehenen Befestigungsplatten 16a, 16b erfolgt bevorzugt - wie auch im Falle der in Fig. 3 gezeigten Ausführungsform - über lösbare Schraubverbindungen. Durch die vorteilhafte Ausgestaltung des temperierten Probennehmers 1 mit modular ausgestalteter Temperiereinheit 7 lässt sich ein Temperier- bzw. Kühlmodul 7 je nach Bedarf hinzufügen oder abmontieren. Das Temperiermodul 7 ist thermisch von dem in dem Gehäuse 3 angeordneten Probennehmer 1 isoliert.

### Bezugszeichenliste

- 1: erfindungsgemäßer Probennehmer
- 2: Probenentnahmestelle
- 3: Gehäuse des Probennehmers
- 4: Tür des Gehäuses
- 5: Elektronikmodul / Regel-/Auswerteeinheit
- 6: Probensammeleinheit
- 7: Kühl-/Temperiermodul
- 8: Seitenwand
- 9: Deckfläche
- 10: Bodenfläche
- 11: Gehäusemodul
- 12: Probenentnahmeeinheit / Dosiereinheit
- 13: Energieversorgungseinheit
- 14: Adaptereinheit
- 15: Analysemodul
- 16: Befestigungsplatte
- 16a: Befestigungsplatte
- 16b: Befestigungsplatte
- 17: Kompressor
- 18: Tür des Temperiermoduls

## Patentansprüche

1. Probennehmer (1) zur automatischen Entnahme von flüssigen Proben aus einer Probenentnahmestelle (2), bestehend aus zumindest einem Gehäuse (3) mit zumindest einer Tür (4), mit einer Energievorsorgungseinheit (13), mit einer Regel-/Auswerteeinheit (5), mit einer Probenentnahmeeinheit (10), die in einem vorgebbaren Zeitabstand eine vorgegebene Probenmenge aus der Probenentnahmestelle (2) entnimmt, mit einer im unteren Bereich des Gehäuses (3) des Probennehmers (1) angeordneten Probensammeleinheit (6), in der die entnommenen Proben gelagert sind, und einer Temperiereinheit (7), die zumindest den Bereich des Probennehmers (1), in dem die Probensammeleinheit (6) angeordnet ist, auf eine vorgegebene Temperatur regelt,
wobei die Temperiereinheit (7) in einem separaten Gehäusemodul (11) angeordnet ist, und wobei eine Adaptereinheit (14) vorgesehen ist, mit der das separate Gehäusemodul (11) mit der Temperiereinheit (7) an einer Außenfläche des Gehäuses (3) des Probennehmers (1) adaptierbar ist, wobei das Gehäuse (3) des Probennehmers (3) und das Gehäusemodul (11) thermisch voneinander isoliert sind.

2. Vorrichtung nach Anspruch 1,
wobei das Gehäusemodul (11) mit der Temperiereinheit (8) im montierten Zustand an einer Seitenwand (8) des Gehäuses (3) oder an der Deckfläche (12) oder an der Bodenfläche (13) des Gehäuses (3) des Probennehmers (1) angeordnet ist.

3. Vorrichtung nach Anspruch 1,
wobei zumindest eine Befestigungsplatte (16) vorgesehen ist, an der das Gehäuse des Probennehmers und/oder das Gehäusemodul (11) mit der Temperiereinheit (7) befestigt sind/ist.

4. Vorrichtung nach Anspruch 3,
wobei die Befestigungsplatte (16) bzw. die Befestigungsplatten (16a, 16b) an der Rückseite und oder an zumindest einer Seitenwand (8) des Gehäuses (3) des Probennehmers (1) und/oder des Gehäusemoduls (11) mit der Temperiereinheit (7) vorgesehen ist.

5. Vorrichtung nach Anspruch 3 oder 4,
wobei das Gehäusemodul (11) mit der Temperiereinheit (7) oberhalb des Gehäuses (3) des Probennehmers (1) an der Befestigungsplatte (16) bzw. an den Befestigungsplatten (16a, 16b) befestigt ist.

6. Vorrichtung nach Anspruch 1,
wobei eine Analysevorrichtung (15) in dem Gehäuse (3) plaziert ist, mit der eine online-Analyse an einer entnommenen Probe durchgeführt wird.

7. Vorrichtung nach Anspruch 1,
wobei die Energievorsorgungseinheit (13) und/oder die Regel-/Auswerteeinheit (5) als Elektronikmodul (5) ausgestaltet sind.

8. Vorrichtung nach Anspruch 1,
wobei die Probenentnahmeeinheit (12), zumindest bestehend aus einem Ansaugschlauch, einer Pumpe und einer Verteilerstation für die Proben, als Modul ausgestaltet ist.

## Claims

1. Sampler (1) designed to automatically take liquid samples from a sampling point (2), consisting of at least one housing (3) with at least one door (4), with an energy supply unit (13), with a control/evaluation unit (5), with a sampling unit (10), which takes a predefined amount of sample from the sampling point (2) at a predefinable interval, with a sample collector (6), arranged in the lower section of the housing (3) of the sampler (1), in which the samples taken are stored, and with a temperature regulation unit (7), which regulates to a predefined temperature the part of the sampler (1), at least, in which the sample collector (6) is arranged,
wherein the temperature regulation unit (7) is arranged in a separate housing module (11), and wherein an adapter unit (14) is provided with which it is possible to adapt the separate housing module (11) with the temperature regulation unit (7) on an outer surface of the housing (3) of the sampler (1), wherein the housing (3) of the sampler (3) and the housing module (11) are thermally isolated from one another.

2. Unit as claimed in Claim 1,
wherein the housing module (11) with the temperature regulation unit (8) is arranged in the mounted state on a side wall (8) of the housing (3) or on the top surface (12) or on the bottom surface (13) of the housing (3) of the sampler (1).

3. Unit as claimed in Claim 1,
wherein at least one fastening plate (16) is provided on which the housing of the sampler and/or the housing module (11) with the temperature regulation unit (7) is/are fixed.

4. Unit as claimed in Claim 3,
wherein the fastening plate (16) or fastening plates (16a, 16b) is/are provided on the back and or on at least one side wall (8) of the housing (3) of the sampler (1) and/or of the housing module (11) with the temperature regulation unit (7).

5. Unit as claimed in Claim 3 or 4,
wherein the housing module (11) with the temperature regulation unit (7) is secured above the housing (3) of the sampler (1) on the fastening plate (16) or on the fastening plates (16a, 16b).

6. Unit as claimed in Claim 1,
wherein an analysis unit (15) is placed in the housing (3) with which an online analysis is performed on a sample taken.

7. Unit as claimed in Claim 1,
wherein the energy supply unit (13) and/or the control/evaluation unit (5) are designed as an electronic module (5).

8. Unit as claimed in Claim 1,
wherein the sampling unit (12), consisting at least of a suction hose, a pump and a sample distribution station, is designed as a module.

## Revendications

1. Préleveur d'échantillons (1) destiné au prélèvement automatique d'échantillons liquides à partir d'un point de prélèvement d'échantillons (2), constitué au moins d'un boîtier (3) avec au moins une porte (4), avec une unité d'alimentation en énergie (13), avec une unité de régulation / d'exploitation (5), avec une unité de prélèvement d'échantillons (10), qui prélève selon un intervalle de temps prédéfinissable une quantité prédéfinie d'échantillons à partir du point de prélèvement d'échantillons (2), avec une unité collectrice d'échantillons (6) disposée dans la zone inférieure du boîtier (3) du préleveur d'échantillons (1), unité dans laquelle sont entreposés les échantillons prélevés, et une unité de régulation de température (7), qui régule à une température prédéfinie au moins la zone du préleveur d'échantillons (1), dans laquelle l'unité collectrice d'échantillons (6) est disposée,
pour lequel l'unité de régulation de température (7) est disposée dans un module boîtier (11), et pour lequel est prévue une unité adaptatrice (14), avec laquelle le module boîtier (11) séparé est adaptable avec l'unité de régulation de température (7) sur une surface extérieure du boîtier (3) du préleveur d'échantillons (1), le boîtier (3) du préleveur d'échantillons (3) et le module boîtier (11) étant isolés thermiquement l'un par rapport à l'autre.

2. Dispositif selon la revendication 1,
pour lequel le module boîtier (11) est disposé avec l'unité de régulation de température (8) à l'état monté sur une paroi latérale (8) du boîtier (3) ou sur une surface supérieure (12) ou sur la surface inférieure (13) du boîtier (3) du préleveur d'échantillons (1).

3. Dispositif selon la revendication 1,
pour lequel est prévue au moins une plaque de fixation (16), sur laquelle est/sont fixé(s) le boîtier du préleveur d'échantillons et/ou du module boîtier (11) avec l'unité de régulation de température (7).

4. Dispositif selon la revendication 3,
pour lequel la plaque de fixation (16) ou les plaques de fixation (16a, 16b) est/sont prévue(s) avec l'unité de régulation de température sur la face arrière et/ou sur au moins une face latérale (8) du boîtier (3) du préleveur d'échantillons (1) et/ou du module boîtier (11).

5. Dispositif selon la revendication 3 ou 4,
pour lequel le module boîtier (11) est fixé au-dessus du boîtier (3) du préleveur d'échantillons (1) sur la plaque de fixation (16) ou sur les plaques de fixation (16a, 16b).

6. Dispositif selon la revendication 1,
pour lequel est placé dans le boîtier (3) un dispositif d'analyse (15), avec lequel est effectué une analyse en ligne sur un échantillon prélevé.

7. Dispositif selon la revendication 1,
pour lequel l'énergie d'alimentation en énergie (13) et/ou l'unité de régulation / d'exploitation (5) sont conçues en tant que module électronique (5).

8. Dispositif selon la revendication 1,
pour lequel l'unité de prélèvement d'échantillons (12), constituée au moins d'un flexible d'aspiration, d'une pompe et d'une station distributrice pour les échantillons, est conçue en tant que module.
